## Europäisches Patentamt

## European Patent Office

## Office européen des brevets

(19)

(11) Veröffentlichungsnummer : **0 266 376 B1**

(12) **EUROPÄISCHE PATENTSCHRIFT**

(45) Veröffentlichungstag der Patentschrift :
**15.01.92 Patentblatt 92/03**

(51) Int. Cl.$^5$ : **G01P 5/14**

(21) Anmeldenummer : **87902406.5**

(22) Anmeldetag : **24.04.87**

(86) Internationale Anmeldenummer :
**PCT/DE87/00182**

(87) Internationale Veröffentlichungsnummer :
**WO 87/06710 05.11.87 Gazette 87/24**

(54) **VORRICHTUNG UND VERFAHREN ZUR MESSUNG DER STRÖMUNGSGESCHWINDIGKEIT EINER FREIEN STRÖMUNG IM RAUM.**

(30) Priorität : **24.04.86 DE 3613867**
**06.10.86 DE 3634005**

(43) Veröffentlichungstag der Anmeldung :
**11.05.88 Patentblatt 88/19**

(45) Bekanntmachung des Hinweises auf die
Patenterteilung :
**15.01.92 Patentblatt 92/03**

(84) Benannte Vertragsstaaten :
**DE FR GB IT**

(56) Entgegenhaltungen :
**DE-A- 1 920 699**

(56) Entgegenhaltungen :
**DE-A- 2 557 631**
**DE-B- 1 226 332**
**DE-C- 3 500 988**
**US-A- 3 699 811**

(73) Patentinhaber : **SOMMER, Roland**
**Kronthaler Weg 15**
**W-6231 Schwalbach am Taunus (DE)**

(72) Erfinder : **SOMMER, Roland**
**Kronthaler Weg 15**
**W-6231 Schwalbach am Taunus (DE)**

(74) Vertreter : **Schüler, Helga Eva-Marie**
**Patentanwalt Dr. rer. nat. Helga Schüler**
**Kaiserstrasse 69**
**W-6000 Frankfurt 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 266 376 B1

Jouve, 18, rue Saint-Denis, 75001 PARIS

## Beschreibung

Die Erfindung betrifft ein Verfahren zur Messung der Strömungsgeschwindigkeit einer freien Strömung im Raum mittels eine hohlen rotationssymmetrischen Strömungskörpers mit mehreren auf seinem Umfang verteilt angeordneten Bohrungen, die in durch Trennwände in seinem hohlen Innenraum gebildete Meßkammern reichen, sowie eine Vorrichtung zur Durchführung dieses Verfahrens, die einen derartigen Strömungskörper und Druckmeßeinrichtungen umfaßt.

Das Verfahren und die Vorrichtung der Erfindung dienen zum einen dazu, als feste Sonde zur Messung der Geschwindigkeit eines strömenden Mediums, das diese Sonde umströmt, eingesetzt zu werden, und zum anderen, um als bewegte Sonde, z.B. an Flugkörpern, Schiffen, Landfahrzeugen oder dergleichen, bei der Bewegung durch ein Medium, beispielsweise Luft, zur Messung der relativen Geschwindigkeit zwischen dem Körper, der die Sonde trägt, und dem Medium zu dienen. Im letzteren Falle dient die Sonde, mit anderen Worten, also zur Messung der Geschwindigkeit eines Flugzeugs, eines Schiffes, eines Landfahrzeugs oder dergleichen. Weiterhin bietet die Messung von Strömungen in Rohrleitungen z.B. im chemischen Bereich viele Anwendungsmöglichkeiten. Solange es Fahrzeuge gibt, ist es notwendig, die Geschwindigkeit der Fahrzeuge zu messen. Insbesondere bei Flugzeugen ist die Kenntnis der Geschwindigkeit wesentlich. Es gibt aber auch viele andere technische Probleme, bei denen strömende Medien gemessen werden müssen. Die seit langem bekannten Meßgeräte waren:

Drucksonden, die zur Messung des statischen Druckes an irgendeiner Stelle innerhalb einer Strömung dienen und beispielsweise aus einem vorne abgerundeten Rohr mit seitlich angebrachten kleinen Bohrungen oder einem Ringsehlitz bestehen. Die Öffnungen, d.h. die Bohrungen oder der Ringschlitz, müssen außerhalb der von der Sondenspitze beeinflußten, beschleunigten Strömung liegen, und die Sonde mißt nur richtig bei genau axialer Anströmung. Dieser geringe Anblaswinkel ist bei dem praktischen Einsatz häufig von Nachteil.

Pitot-Rohre messen den Gesamtdruck in dem Spezialfall, daß dieser gleich dem Staudruck ist, wenn die Strömung in einem Staurohr vollständig abgebremst wird.

Staurohre nach Prandtl sind Kombinationen aus einem Pitot-Rohr mit einer zur Messung des statischen Druckes notwendigen Drucksonde und gestatten die Bestimmung des Staudruckes als Differenz aus dem Gesamtdruck und dem gemessenen statischen Druck, woraus sich weiterhin die Anblasgeschwindigkeit bestimmen läßt. Sie ergibt sich rechnerisch aus der Quadratwurzel aus der Druckdifferenz (Gesamtdruck minus statischer Druck), geteilt durch die Dichte des Mediums.

Auch bei den Staurohren nach Prandtl können genaue Messungen nur bei praktisch axialer Anströmung erzielt werden. Ein wesentlicher Grund dafür ist unter anderem, daß die Öffnung bzw. Öffnungen zur Messung des statischen Druckes räumlich relativ weit entfernt sind von der Staudruck-Meßöffnung. Deshalb können nur bei ganz gleichmäßiger Umströmung des Prandtl-Rohres in axialer Richtung exakte Messergebnisse erzielt werden.

Aus der DE-OS 19 20 699 ist eine Vorrichtung zum Messen statischer Strömungsmitteldrücke an Flugzeugen bekannt, die sowohl auf dem Umfang eines Strömungskörpers, der in die Strömung gebracht wird, angeordnete Bohrungen als auch zwei Kammern und Druckmeßeinrichtungen aufweist. Der Zweck dieser bekannten Sonde ist, durch Mehrfachmessung in axialer Richtung des Strömungskörpers Fehler in der an sich altbekannten Weise der Druckmessung zur Ermittlung statischer (barometrischer) Drücke auszuschalten, insbesondere Fehler wegzumitteln, die sich durch die Störung der Halterung der Meßsonde einstellen. Somit sind die sich entlang der Achse befindenden Meßstellen alle Meßstellen für den statischen Druck und die Meßergebnisse werden gemittelt, um einen Mittelwert der Meßwerte zu erhalten, der nachher als statischer Druck verwertet werden kann.

Schließlich sind seit langem Venturi-Rohre als Meßeinrichtungen zur Messung von Durchflußgeschwindigkeiten bekannt. Ein Venturi-Rohr ist ein mit einer Verengung ausgestattes Rohr, das axial durchströmt wird. Mit einem Manometer wird der statische Druckunterschied zwischen einer Stelle, an der die Strömung noch weitgehend laminar ist, und an der Verengungsstelle gemessen. Bei reibungs- und wirbelfreier Strömung ergibt sich die Durchflußgeschwindigkeit in dem laminar durchströmten Teil des Rohres durch Anwendung der Kontinuitätsgleichung und der Bernoullischen Gleichung als Quadratwurzel aus der Differenz der statischen Drücke, geteilt durch die Dichte des strömenden Mediums, und einem Geometriefaktor des Venturi-Rohres.

Ausgehend von einem bekannten Venturi-Rohr zur Messung der Strömungsgeschwindigkeit in einem Rohr sollte es Aufgabe der Erfindung sein, ein Verfahren und eine Vorrichtung zur Messung der Strömungsgeschwindigkeit einer freien Strömung im Raum zu schaffen, die in einem großen Winkelbereich bezüglich der Strömungsrichtung bzw. der Anblasrichtung einsetzbar sind, in speziellen Ausführungsformen die Strömungsgeschwindigkeit ohne Kenntnis der Dichte des strömenden Mediums und darauf aufbauend die Dichte selbst zu bestimmen gestatten.

Diese Aufgabe wird durch ein Verfahren gelöst, wie es im Anspruch 1 angegeben ist.

Vorteilhafte Ausführungsformen dieses erfindungsgemäßen Verfahrens sind in den Ansprüchen 2 bis 4 angegeben.

Eine Vorrichtung zur Lösung der Aufgabe der Erfindung ist in Anspruch 5 angegeben, und weitere vorteilhafte Ausführungsformen dieser Vorrichtung sind in den Ansprüchen 6 bis 12 beschrieben.

Bei dem Verfahren der Erfindung werden die statischen Drücke an zwei in Längsrichtung verschiedenen Stellen eines Strömungskörpers mit variierender Dicke gemessen und ihre Differenz gebildet, oder aber es wird die Differenz dieser statischen Drücke direkt gemessen, wobei eine erste Meßstelle an oder nahe der dicksten Stelle des Strömungskörpers liegt und die andere Meßstelle an einer stromaufwärts oder stromabwärts gelegenen dünneren Stelle des Strömungskörpers liegt, und die Geschwindigkeit der Strömung ergibt sich dann aus der Quadratwurzel der bestimmten oder der direkt gemessenen Druckdifferenz, geteilt durch die Dichte des strömenden Mediums, und einem Geometriefaktor, der von der Form des Strömungskörpers abhängt.

Vorzugsweise wird als Strömungskörper ein hohler rotationssymmetrischer Meßkopf verwendet, der in seinem Inneren in zwei Kammern unterteilt ist. In der einen Kammer enden die Bohrungen der ersten Meßstelle, während in der anderen Kammer die Bohrungen der anderen Meßstelle enden, so daß sich in der ersten Kammer der statische Druck entsprechend der ersten Meßstelle, und In der zweiten Kammer der statische Druck entsprechend der zweiten Meßstelle einstellt.

Es hat sich gezeigt, daß die Vorrichtung zur Messung der Strömungsgeschwindigkeit gemäß der Erfindung in einem großen Winkelbereich des Anströmwinkels oder Anblaswinkels einsetzbar ist und gute Meßergebnisse liefert. Solange die Strömung über einen großen Bereich gleichmäßig verläuft, liefert die einfache Meßsonde, bestehend aus einem Meßkopf in Form eines Strömungskörpers, der an zwei umlaufenden Stellen mit Meßbohrungen oder einem Ringschlitz versehen ist, gute Meßergebnisse der Strömungsgeschwindigkeit innerhalb eines großen Anblas- oder Strömungswinkelbereichs.Wenn die Strömung ungleichmäßiger ist, hat es sich als zweckmäßig erwiesen, den Meßkopf mit einem Ring zu umgeben, so daß die Strömung in dem Ringkanal zwischen der Oberfläche des Meßkopfes und der Innenfläche des Ringes erfaßt wird. Ein derartiger Ring egalisiert die Strömung und liefert auch bei ungleichmäßiger Strömung um die Meßsonde herum gut reproduzierbare Werte für die Geschwindigkeit.

Im letzteren Falle ist der Strömungskanal, durch den die zu messende Strömung hindurchströmt, ein ringförmiger Kanal, der sich (an der dicksten Stelle des Strömungskörpers) verengt und dann wieder erweitert.

Die Wahl der Form, einschließlich des Durchmessers, des Querschnitts, des Querschnittverlaufs und der Lage bezüglich des Strömungskörpers, für den Ring richtet sich nach verschiedenen Parametern wie beispielsweise der Form des Strömungskörpers, der Lage der Meßöffnungen oder der Schlitze zur Messung der vorhandenen Drücke, den zu erwartenden Strömungsgeschwindigkeiten, Art, Dichte und Gleichmäßigkeit des strömenden Mediums usw. Der Fachmann wird deshalb im allgemeinen die Form und die Stellung des Ringes experimentell bestimmen.

Ein wesentlicher Parameter für die Eigenschaften der Meßsonde ist beispielsweise der Abstand des Ringes von der Oberfläche des Strömungskörpers. Er dient zum einen zur Konzentrierung und Egalisierung der zu messenden Strömung und zum anderen zur Veränderung des Meßbereiches. Wenn der Abstand zwischen Strömungskörper und Ringinnenfläche verkleinert wird, werden die Stromlinien bei gleicher Vorderöffnung des Ringspaltes an der ersten Meßstelle stark zusammengedrängt, und die Druckdifferenz $p_1$-$p_2$ kann bei geeigneter Lage der zweiten Meßstelle dadurch so vergrößert werden, daß kleinere Strömungsgeschwindigkeiten gemessen werden können. Andererseits führt eine weniger starke Einengung der Strömung, die auf die offene Eintrittsfläche des Ringspaltes auftrifft, zu geringeren Druckdifferenzen $p_1$-$p_2$, wodurch die Meßsonde insgesamt weniger empfindlich wird.

Auch die geometrische Form der vorderen Endfläche des Strömungskörpers hat eine wesentliche Bedeutung für die Meßbereiche, in denen die Meßsonde der Erfindung richtig arbeitet. Bei geringeren zu messenden Strömungsgeschwindigkeiten (im Unterschallbereich) wird es zweckmäßig sein, die vordere Endfläche im wesentlichen als Kugelkalotte auszubilden.Man erhält dadurch beim Auftreffen der Strömung auf die Sonde die Vorteile, die sich bei der Umströmung einer Kugel ergeben, wie z.B. die geringe Ablösung der Strömung von einer Kugeloberfläche. Hier liegt vermutlich unter anderem auch ein Grund für den hohen erreichbaren Anblas-Meßwinkel der Sonde gemäß der Erfindung.

Wenn Geschwindigkeiten von Strömungen im Übergangsbereich von Unterschall- zu Überschallströmung gemessen werden sollen, erhält die vordere Endfläche der Meßsonde vorzugsweise die Form eines Stromlinienkörpers, wobei eine im wesentlichen elliptische Form mit einem Achsenverhältnis von 1:1,6 darüber hinaus den Vorteil bietet, daß eine Unabhängigkeit von der Reynoldszahl Re erhalten wird.

Im Überschallbereich einer zu messenden Strömung erweist sich ein typisches spitzes Überschallprofil, wie es an sich in der Strömungslehre bekannt ist, als vorteilhaft für die Form der vorderen Endfläche des Strömungskörpers der Meßsonde gemäß der Erfindung.

Obgleich mit dem beschriebenen Verfahren und der beschriebenen Vorrichtung bereits Strömungsmes-

3

sungen in Winkelbereichen bis zu ± 30° und mehr mit guter Genauigkeit und Reproduzierbarkeit durchgeführt werden konnten, besteht häufig das Bedürfnis, entweder noch größere Meßbereiche der Strömungsrichtung zu erfassen oder bei stark schwankenden Richtungen der Anströmung trotzdem die Strömungsgeschwindigkeit genau zu messen. So bietet beispielsweise die Fahrtmessung bei Helikoptern ein großes Problem. Zum einen ist die Bestimmung der Fahrt eine äußerst wichtige Messung bei Helikoptern, während andererseits gerade diese Messung mit einer am Helikopter starr angebrachten Sonde dadurch erschwert wird, daß der Helikopter Fahrtänderungen durch Schwenken um seine Querachse durchführt, so daß auch die Meßsonde mit verschwenkt wird. Dabei wird die Sonde häufig so stark geschwenkt, daß ihre Mittelachse aus dem Meßbereich in bezug auf die Strömungsrichtung herausgeschwenkt wird.

Gemäß einer vorteilhaften Ausführungsform des erfindungsgemäßen Verfahrens, das auch bei stark wechselnden Anströmrichtungen eine genaue Messung der Strömungsgeschwindigkeit gestattet, wird der Strömungskörper über einen Servo-Mechanismus so in der Strömung ausgerichtet, daß seine Mittelachse in Richtung der Strömung verläuft, indem an mehreren, vorzugsweise in gleichem bestand von dem vorderen Nasenpunkt des Strömungskörpers liegenden Punkten der vorderen Kuppe der Druck gemessen und aus gegebenenfalls bestehenden Druckdifferenzen ein Nachführsignal für den Servo-Mechanismus abgeleitet wird.

Zweckmäßigerweise wird dabei der Druck an vier im gleichen Abstand von dem Nasenpunkt des Strömungskörpers liegenden und voneinander gleich beabstandeten Punkten gemessen und aus der Druckdifferenz der sich gegenüberliegenden Meßpunkte jeweils ein Nachführsignal abgeleitet. Besonders zu bevorzugen ist, das Druckdifferenzsignal zum Nullabgleich einer Brückenschaltung auszunutzen, die ihrerseits im nicht abgeglichenen Zustand einen Servomotor oder zwei Servomotoren, die den Strömungskörper in senkrecht aufeinander stehenden Ebenen drehen, steuert.

Zur Durchführung dieses Verfahrens wird die erfindungsgemäße Vorrichtung dadurch ergänzt, daß auf der vorderen Kuppe des Strömungskörpers im gleichen bestand von dem vordersten Nasenpunkt des Strömungskörpers mehrere Bohrungen vorgesehen sind, in denen Meßeinrichtungen zum Messen des Druckes in der jeweiligen Bohrung und/oder zum Messen von Druckdifferenzen zwischen jeweils zwei Bohrungen vorgesehen sind, die Druckdifferenzsignale abgeben, und daß der Strömungskörper in seinem hinteren Ende um mindestens eine Querachse schwenkbar gelagert und ein Servo-Mechanismus, der vorzugsweise mindestens einen Servomotor umfaßt, vorgesehen ist, dem die gegebenenfalls erzeugten Druckdiffererizsignale zugeführt werden und der den Strömungskörper verschwenkt, bis keine Druckdifferenzen mehr vorhanden sind.

Zu bemerken ist, daß statt der Bohrungen mit den Meßeinrichtungen zum Messen des Druckes oder zum Messen von Druckdifferenzen zwischen zwei Meßpunkten auch Meßeinrichtungen wie beispielsweise Piezo-Kristalle in die Oberfläche des Strömungskörpers an den Meßpunkten eingelassen sein können. Ein derartiger Aufbau ist jedoch fertigungsmäßig aufwendig, und die Oberfläche des Strömungskörpers kann dadurch Inhomogenitäten erhalten.

Obgleich bereits drei Druckmeßpunkte hinreichende Informationen für die Servosteuerung liefern würden, sind vorzugsweise vier Bohrungen im gleichen bestand zum Nasenpunkt und voneinander auf der Vorderkuppe des Strömungskörpers angeordnet, und die Druckdifferenz der zwei sich jeweils gegenüberliegenden Bohrungen liefert das Steuersignal für einen Servomotor für die Schwenkung des Strömungskörpers um eine erste Querachse, während die Druckdifferenz des anderen Bohrungspaares das Steuersignal für einen zweiten Servomotor zur Schwenkung um eine zweite, zu der ersten rechtwinklige Querachse liefert. Auf diese Weise kann ein großer Raumwinkel bei der Verschwenkung des Strömungskörpers erfaßt werden.

In einer Ausführungsform der Erfindung sind die Meßbohrungen mit Druckmeßleitungen verbunden, die sich durch das Innere des Strömungskörpers erstrecken. In einer anderen Ausführungsform befindet sich zur Messung der Druckdifferenz zwischen zwei Druckbohrungen in einem Verbindungsstück zwischen diesen Bohrungen eine Thermistor-Strömungsdiode ("flow-sensor"), die in einer elektrischen Brückenschaltung liegt, die ihrerseits über einen Servo-Verstärker mit einem Servomotor zum Verschwenken des Strömungskörpers verbunden ist. Die Druckdifferenz bewirkt an der Thermistor-Strömungsdiode solch eine Temperaturdifferenz (da die Temperatur auf der Seite des höheren Druckes niedriger ist), daß eine abgeglichene Brückenschaltung von der Diode aus dem Gleichgewicht gebracht wird. Solange die Brücke nicht abgeglichen ist, wird über den Servo-Verstärker der Servomotor betätigt, der den Strömungskörper so lange verschwenkt, bis keine Druckdifferenz mehr entstehen kann und die Brücke dementsprechend abgeglichen ist.

In dieser letzten Ausführungsform findet die Bestimmung der Druckdifferenz im Inneren des Strömungskörpers statt und nur elektrische Leitungen müssen aus dem Strömungskörper herausgeführt werden.

Durch diese Nachführeinrichtung gemäß der Erfindung wird also die Meßsonde immer in die resultierende Strömungsrichtung gestellt, so daß sie stets in ihrem optimalen Bereich arbeitet. Während des Nachführvorganges treten auch kaum Schwankungen der Messung auf, da der an sich relativ breite Winkelmeßbereich der Sonde die Nachführverzögerung auszugleichen in der Lage ist.

Ein weiterer Vorteil bei der Erfindung ist die Möglichkeit, über eine mechanisch gekoppelte Winkel-Abfrage-

**4**

einrichtung den Winkel zwischen Fahrtrichtung und Strömungsrichtung abfragen zu können. Zu diesem Zweck kann ein Potentiometer beim Verschwenken des Strömungskörpers mechanisch gekoppelt verstellt werden und liefert dann den Winkel in bezug auf eine Nullstellung. Auch an sich bekannte andere Winkelkodiereinrichtungen können den Winkel der Abweichung aus einer Nullstellung (z.B. der Senkrechten zu einer Helikopterwand) abfragen und angeben.

Im folgenden wird die Erfindung durch Ausführungsformen und Beispiele näher erläutert.

Dabei wird auch auf die beigefügten Zeichnungen bezug genommen.

In den Zeichnungen zeigen:

Figur 1,2 und 3 schematische Darstellungen von erfindungsgemäßen Vorrichtungen zur Messung der Strömungsgeschwindigkeit einer freien Strömung zur Erläuterung des Prinzips der Erfindung,

Figur 4 eine Ausführungsform der erfindungsgemäßen Vorrichturig,

Figur 5 eine andere Ausführungsform der in Fig. 4 dargestellten erfindungsgemäßen Vorrichtung mit einem Ring,

Figur 6 noch eine andere Ausführungsform der erfindungsgemäßen Vorrichtung,

Figur 7 eine weitere Ausführungsform der erfindungsgemäßen Vorrichtung, die ähnlich der in Fig. 6 gezeigten Ausführungsform ist,

Figur 8 eine schematische Darstellung noch einer weiteren Ausführungsform der erfindungsgemäßen Vorrichtung,

Figur 9 eine andere Ausführungsform der in Fig. 8 dargestellten Vorrichtung mit einem Ring und

Figur 10 ein schematisches Blockschaltbild einer Anordnung, mit der das Verfahren zum Ausrichten der Vorrichtung in der Strömung durchgeführt werden kann.

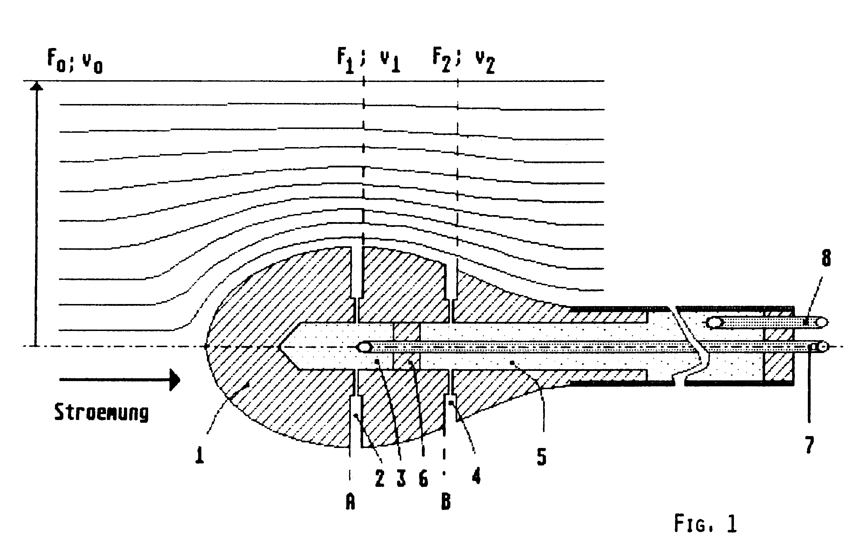

Figur 1 zeigt schematisch eine Vorrichtung zur Messung der Strömungsgeschwindigkeit einer freien Strömung im Raum gemäß der Erfindung. Ein Strömungskörper 1 mit einem geringen Strömungswiderstand in Längsrichtung besitzt, in Strömungsrichtung gesehen, dicht hinter seiner dicksten Stelle an der Stelle A Bohrungen 2, die mit einer ersten Kammer 3 im Inneren des hohlen Rotationskörpers verbunden sind. Der Strömungskörper besitzt weiterhin an einer engen Stelle B Bohrungen 4, die mit einer zweiten Kammer 5 im Inneren des hohlen Rotationskörpers verbunden sind. Die erste Kammer 3 ist von der zweiten Kammer 5 durch eine Trennwand 6 getrennt, durch die eine Druckleitung 7 bis an das hintere Ende der Meßsonde geführt ist. Die zweite Kammer 5 ist mit einer Druckleitung 8 verbunden, die ebenfalls am hinteren Ende der Meßsonde aus dieser herausgeführt ist.

Unter dem Einfluß einer auf den vorderen Teil der Meßsonde auftreffenden Strömung stellt sich in der Kammer 3 über die Bohrungen 2 ein erster statischer Druck $p_1$ ein, während sich in der zweiten Kammer 5 durch die Öffnungen 4 der statische Druck $p_2$ einstellt. Der Druck $p_1$ kann an der Druckleitung 7 und der Druck $p_2$ kann an der Druckleitung 8 gemessen werden. Wie später noch gezeigt wird, ergibt sich die Geschwindigkeit $v_0$ der Strömung in dem laminaren Bereich vor der Meßsonde aus der Beziehung:

$$v_0 = \sqrt{\frac{2}{\rho} (p_1 - p_2)} \cdot G \quad (1)$$

wobei G ein Geometriefaktor ist, der von dem Durchmesser des Strömungskörpers an den Stellen, an denen die statischen Drücke gemessen werden, abhängt.

Zur Erläuterung des Prinzips der Messung anhand der Figur 1 werden folgende Annahmen gemacht.

Im Bereich vor der Meßsonde am Punkt "0" sei die Strömung laminar und besitze die Geschwindigkeit $v_0$. Betrachtet man einen Kreiszylinderaussehnitt aus der Strömung mit einer Kreisfläche $F_0$, der so groß ist, daß sich am Rand des Kreiszylinders die Störung der Strömung durch die Meßsonde nicht mehr auswirkt, d.h. dort wieder die Stromlinien achsparallel verlaufen, so werden die Stromlinien an der ersten Meßstelle, die der Stelle A am Strömungskörper entspricht, stark zusammengedrängt. Der Strömungskörper besitze an der Stelle A die Querschnittsfläche $F_A$, und für die Strömung verbleibt innerhalb des Kreiszylinders die Ringfläche $F_1$, für die dementsprechend gilt:

$$F_1 = F_0 - F_A.$$

In analoger Weise gilt in der Höhe der zweiten Meßstelle B:

$$F_2 = F_o - F_B.$$

In dem der Strömung zur Verfügung stehenden Ringraum um die Sonde herum erhöht sich die Geschwindigkeit an der ersten Meßstelle auf $v_1$ und nimmt an der zweiten Meßstelle wieder so weit ab, daß sie $v_2$ beträgt. Es gilt:

$$V_0 < V_2 < V_1.$$

Gemäß der Kontinuitätsgleichung gilt:

$$v_0 F_0 = v_1 F_1 = v_2 F_2. \quad (2)$$

Der statische Druck p ist gleich dem Gesamtdruck $p_{ges}$ minus dem Staudruck q, und der Gesamtdruck $p_{ges}$ ist an den Stellen A und B gleich. Die Differenz $p_2$ minus $p_1$ der statischen Drücke an den Stellen A und B liefert

demnach

$$p_2 - p_1 = (p_{ges} - q_2) - (p_{ges} - q_1) = q_1 - q_2 = \frac{\rho}{2}(v_1{}^2 - v_2{}^2).$$

Aus der Beziehung $v_1 F_1 = v_2 F_2$ erhält man

$$p_1 - p_2 = \frac{\rho}{2} v_2{}^2 \left(\frac{F_2{}^2}{F_1{}^2} - 1\right)$$

oder

$$v_2 = \sqrt{\frac{2}{\rho} \frac{(p_1 - p_2)}{\left(\frac{F_2{}^2}{F_1{}^2} - 1\right)}}\,.$$

Unter Verwendung der Beziehungen

$$v_0 = v_2 \frac{F_2}{F_0}$$
$$F_1 = F_0 - F_A$$
$$F_2 = F_0 - F_B$$

erhält man unter der Vorraussetzung, daß der Strömungskörper rotationssymmetrisch ist, d.h. seine Querschnitte Kreisflächen sind, durch einfache mathematische Umformungen

$$v_0 = \sqrt{\frac{2}{\rho}(p_1 - p_2)} \sqrt{\frac{(F_0 - F_A - F_B + \frac{1}{F_0} F_A \cdot F_B)^2}{2 F_0(F_A - F_B) + F_B{}^2 - F_A{}^2}} \quad (3)$$

oder

$$v_0 = \sqrt{\frac{2}{\rho}(p_1 - p_2)} \cdot G\,. \quad (1)$$

In diesen Gleichungen bezeichnet $\rho$ jeweils die Dichte des strömenden Mediums, das gemessen werden soll bzw. des ruhenden Mediums, in dem die Meßsonde bewegt wird.

In den Geometriefaktor G gehen die kreisförmigen Flächen $F_A$, $F_B$ und $F_O$ ein, die ähnlich wie bei einem Venturi-Rohr herkömmlicher Art die Verengung im betrachteten Strömungskanal berücksichtigen. Uber die Fläche $F_O$ wird berücksichtigt, in welcher Entfernung von der Meßsonde die Strömung wieder ungestört ist.

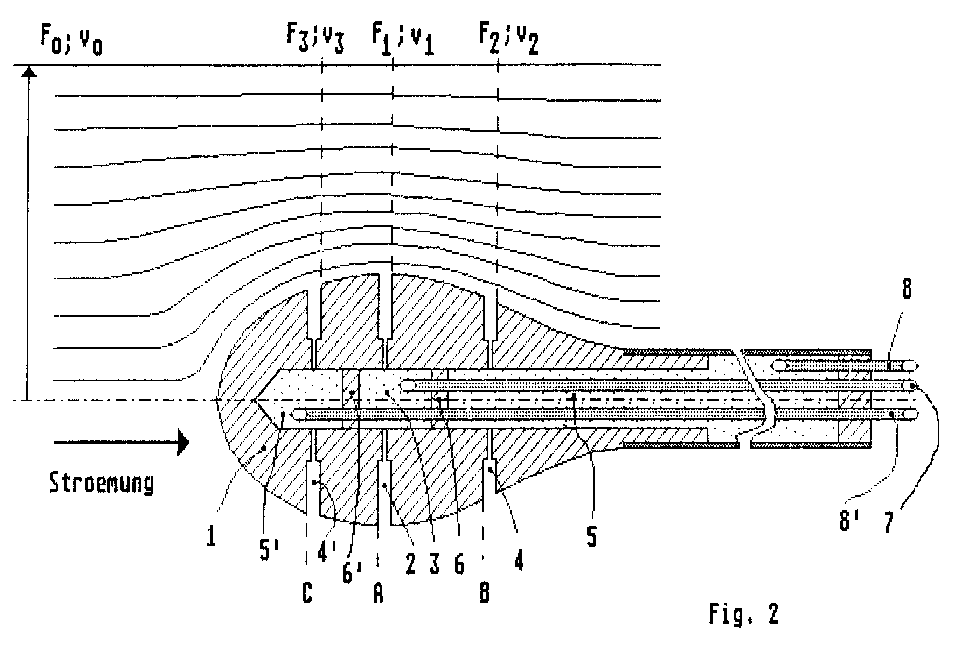

In der in Fig. 2 dargestellten Vorrichtung ist ein Strömungskörper 1 mit drei ringförmigen Meßstellen A, B und C versehen. Die zusätzliche Meßstelle C liegt dabei vor der dicksten Stelle des Strömungskörpers 1, und entsprechend befindet sich eine zweite Trennwand 6′, die Meßkammern 3′ und 5′ voneinander trennt, vor der dicksten Stelle. Für den in entsprechenden zweiten Bohrungen 4′ gemessenen statischen Druck $p_3$ an der Meßstelle C gelten in bezug auf den statischen Druck $p_1$ an der Meßstelle A die gleichen Betrachtungen, die für die statischen Drücke $p_2$ und $p_1$ angestellt wurden. Es gilt dementsprechend

$$v_0 = \sqrt{\frac{2}{\rho}(p_1 - p_3)} \cdot G' \quad (1')$$

wobei G′ genau wie G in Gleichung (1) ein experimentell bestimmbarer Geometriefaktor ist, der unter anderem die Kompression des strömenden Mediums entlang des Strömungskörpers entsprechend der Strömungsgeschwindigkeit berücksichtigt. Durch Messen der Druckdifferenzen $(p_2-p_1)$, $(p_3-p_1)$ und $(p_2-p_3)$ können hinreichend viele Parameter erhalten werden, um unter Berücksichtigung der Geometriefaktoren über die Bernoullische Gleichung die Dichte $\rho$ des strömenden Mediums zu berechnen bzw. die Strömungsgeschwindigkeit dichteunabhängig zu bestimmen.

Diese Möglichkeiten sind auf vielen Anwendungsgebieten der erfindungsgemäßen Sonde von großem Vorteil, so z.B. in der Flugtechnik, wo dadurch die Höhenkorrektur entfällt.

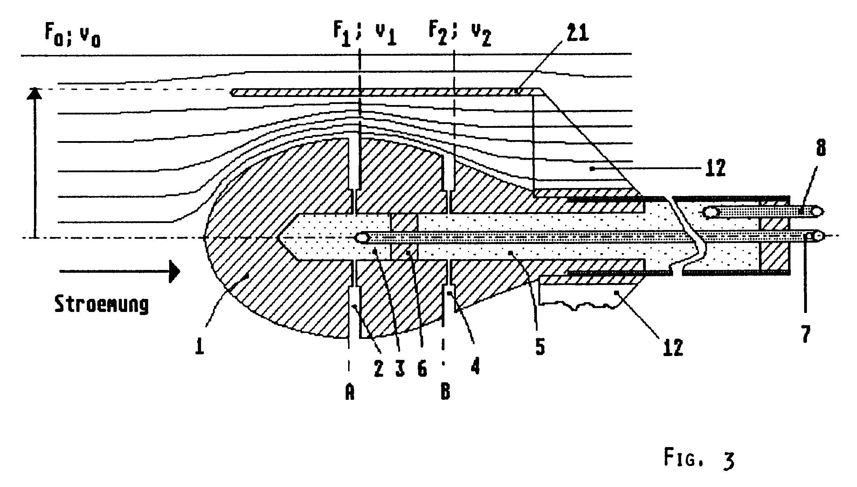

Figur 3 erläutert das Prinzip der Erfindung für den Fall, daß ein Ring 21 um den Strömungskörper 1 herum angeordnet ist. Die Strömung tritt durch eine ringförmige Fläche in den Ringspalt ein, in dem sich die beiden Meßstellen A und B befinden. In dem dargestellten Beispiel ist der Ring 21 ein Zylindermantel, der über Stützen oder Halterungen 12 mit dem Strömungskörper 1 verbunden ist.

Der Durchströmungsquerschnitt des Ringspaltes verengt sich umso stärker, je dicker sich der Strömungskörper 1 nach außen aufwölbt. Dementsprechend erhöht sich auch die Strömungsgeschwindigkeit $v_1$, die an der zweiten Meßstelle B wieder auf $v_2$ abnimmt. In diesem Fall wird die Strömung im wesentlichen nur in dem dem Ringquerschnitt entsprechenden Bereich gestört, so daß näherungsweise diese Kreisfläche gleich $F_O$ ist. Entsprechend sind $F_1$ bzw. $F_2$ die Kreisringflächen oder Spaltquerschnitte zwischen dem Ring 21 und der Oberfläche des Strömungskörpers 1 an den Meßstellen A bzw. B.

Das Stromlinienbild zeigt deutlich, daß die Anordnung, die Länge und der Durchmesser des Ringes sowie sein bestand zum Strömungskörper 1 den Meßbereich der Sonde und die Abschirmung von Störungen innerhalb der Strömung beeinflussen.

Zu bemerken ist, daß eine Schrägstellung der Meßsonde gegen die Strömung, d.h. eine Vergrößerung des Anblaswinkels, insbesondere dann keinen Meßfehler bewirkt, wenn die vordere Endfläche des Strömungskörpers 1 eine Kugelkalotte ist.

Die zu messende Strömung trifft auf die Kugelkalotte auf und haftet an der Kugeloberfläche so, daß sie beim Eintritt in den Ringspalt auf einer Seite beschleunigt und auf der anderen Seite verzögert wird, wobei durch die Rundummessung (um den Strömungskörper herum) eine Druckmittelung entsteht, die die bei den Meßwerten für die Geschwindigkeit gefundene starke Unabhängigkeit vom Anblaswinkel erklärt.

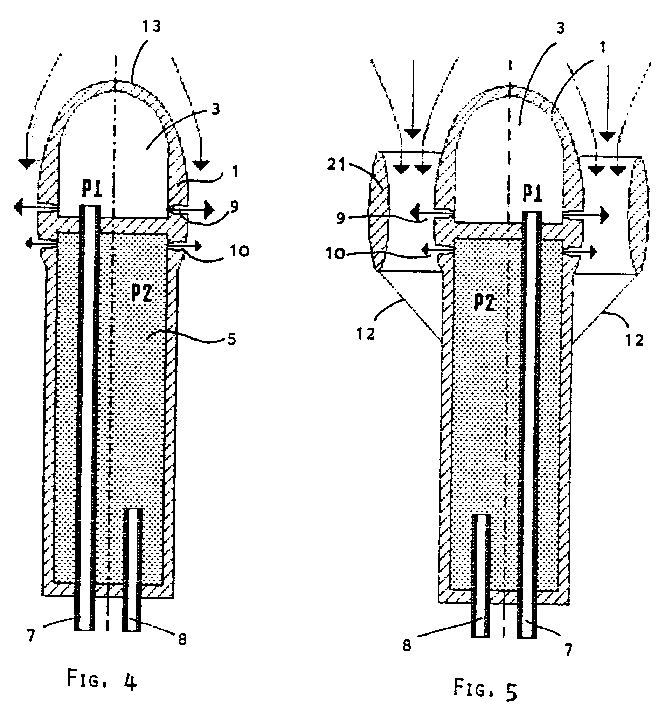

Die in Figur 4 dargestellte Meßsonde gemäß der Erfindung besitzt bei umlaufende Ringschlitze 9 und 10, die jeweils druckmäßig mit den entsprechenden Kammern 3 bzw. 5 verbunden sind.Der Ringschlitz 9 befindet sich an der dicksten Stelle des Strömungskörpers 1, und der Ringschlitz 10 befindet sich sehr dicht stromabwärts hinter dem Ringschlitz 9 an einer Stelle, an der sich der Strömungskörper zu verjüngen anfängt. Die statischen Drücke $p_1$, $p_2$ werden über Meßleitungen 7 bzw. 8 aus der Sonde herausgeführt und können mit an sich bekannten Meßeinrichtungen gemessen werden.

In Figur 5 ist eine andere Ausführungsform der erfindungsgemäßen Vorrichtung dargestellt, die einerseits die in Figur 4 dargestellte Meßsonde enthält und außerdem von einem Ring 11 umgeben ist. Der Querschnitt der Ringwand weist ebenfalls eine strömungsmäßig vorteilhafte Form auf. Er umgibt den Strömungskörper 1 so, daß er vor dem ersten Ringschlitz 9 den ringförmigen Strömungskanal zwischen Meßkopfoberfläche und Ringinnenfläche verengt, so daß sich die erste Meßstelle an dem engsten Teil des ringförmigen Strömungskanals befindet. Dort wird die Strömungsgeschwindigkeit am stärksten erhöht und dementsprechend der statische Druck $p_1$, der in der Meßkammer 3 gemessen wird, am stärksten erniedrigt. Der Ring 11 verläuft weiterhin so, daß der ringförmige Strömungskanal in der Höhe des Ringschlitzes 10 wieder stark verbreitert ist, wodurch der statische Druck $p_2$ wesentlich höher als der statische Druck $p_1$ ist. Dahinter strömt das zu messende Medium frei und ohne Wirbelbildung aus dem Meßraum aus.

Der Ring 21 ist mit Trägern 12, die die Strömung wenig stören, an dem Meßkopf befestigt. Im Versuchsstadium, wenn optimale Bedingungen für die konstruktiven Parameter des Ringes 21 gefunden werden sollen, können diese Träger 12 auf einer ringförmigen Halterung befestigt sein, die auf der Meßsonde gleitend verschiebbar ist.

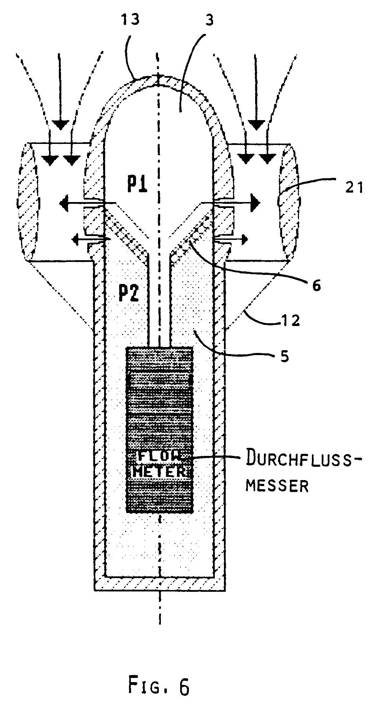

Figur 6 zeigt eine weitere Ausführungsform der erfindungsgemäßen Vorrichtung, bei der die Druckdifferenz $p_1$ - $p_2$ direkt gemessen wird. Als Meßeinrichtungen können sowohl an sich bekannte mechanische Druckdifferenzmeßeinrichtungen wie beispielsweise Membranen verwendet werden, deren Auslenkung vorzugsweise elektrisch gemessen wird. Ein derartiges Meßprinzip eignet sich, wenn hohe Druckdifferenzen zu messen sind.

Bei geringeren Druckdifferenzen $p_1$ - $p_2$ hat sich eine Durchströmungsmessung als vorteilhaft erwiesen. In einem Verbindungskanal zwischen der Kammer 3 und der Kammer 5 befindet sich ein elektronisches Bauteil, das auf den durch die Strömung in dem Verbindungskanal aufgrund des Druckgefälles entstehenden Kühleffekt anspricht. Zu diesem Zweck können beispielsweise Thermistoren, Dioden oder Widerstände verwendet werden, die in dem Verbindungskanal angeordnet werden und in elektronischen Schaltungen vermessen werden. Dabei kann entweder die Abkühlung des wärmeempfindlichen elektronischen Bauteils selbst gemessen werden oder aber es wird eine Kombination aus zwei derartigen Bauteilen, z.B. zwei Dioden, in dem Verbindungskanal ausgerichtet angeordnet und in eine Brückenschaltung als Brückenglieder eingebaut. Wenn ein Bauteil kühler als das andere ist, wird die Brücke verstimmt, und die Spannung, der Strom oder die Energie, die zum Brückenabgleich erforderlich sind, geben ein Maß für die Druckdifferenz.

In diesem Fall werden in an sich bekannter Weise entweder die elektrischen Verbindungsleitungen abgedichtet durch die Wand der Meßsonde geführt, oder die Stromversorgung erfolgt über Funk, in gleicher Weise werden die Meßdaten über Funk ausgegeben.

Der Vorteil dieser gekapselten Ausführungsform der Meßsonde ist, daß praktisch keine Verschmutzung der Sonde die Messungen stören kann.

Wenn derartige Sonden in Flugzeugen, Raketen oder anderen Flugkörpern eingebaut werden, kann leicht eine Vereisung an dem Durchströmungskanal und/oder an den Meßbohrungen auftreten. Es ist deshalb zweckmäßig, Heizeinrichturigen vorzusehen, mit denen die Sondenwand ständig auf einer vorgegebenen Temperatur gehalten wird, so daß keine Eisbildung eintreten kann.

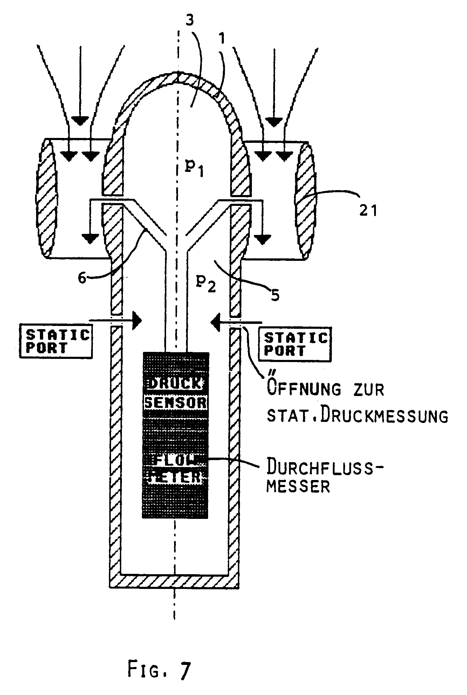

Figur 7 zeigt schließlich noch eine andere Ausführungsform der erfindungsgemäßen Vorrichtung, deren Aufbau ähnlich wie bei der in Figur 6 dargestellten Meßsonde ist. Die zweite Meßstelle befindet sich in diesem fall jedoch weiter entfernt von der ersten Meßstelle an dem hinteren, als Halteteil ausgebildeten Schaft der Meßsonde. Die Strömung, die den ringförmigen Strömungskanal durchströmt hat, ist an der zweiten Meßstelle wieder weitgehend egalisiert, so daß an dieser Meßstelle der herrschende barometrische Druck als statischer Druck abgegriffen werden kann, ähnlich wie bei einer eingangs geschilderten Drucksonde. Bei Flugkörpern wird die Kenntnis dieses barometrischen oder statischen Druckes zur Bestimmung der Höhe benötigt.

Die Meßeinrichtungen umfassen in diesem Fall sowohl eine Meßeinrichtung zur Bestimmung der Druckdifferenz $p_1$ - $p_2$ als auch eine weitere Meßeinrichtung zur Bestimmung des statischen Druckes $p_2$.

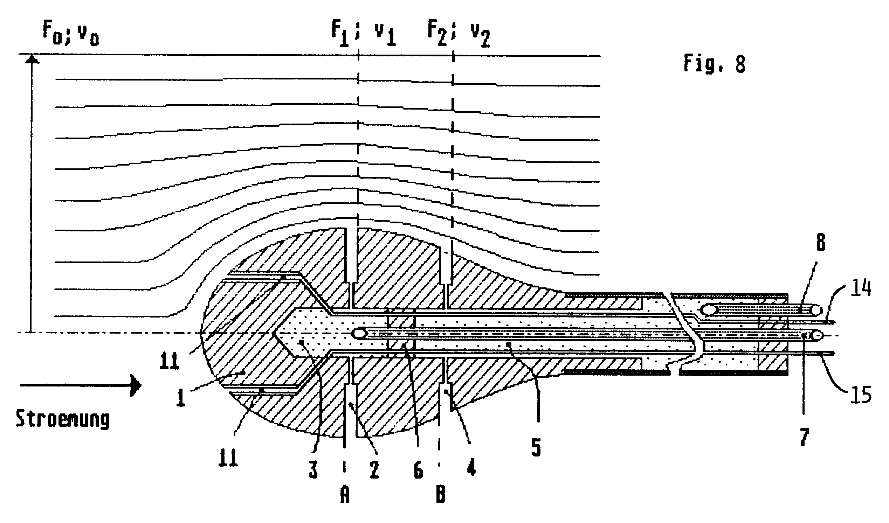

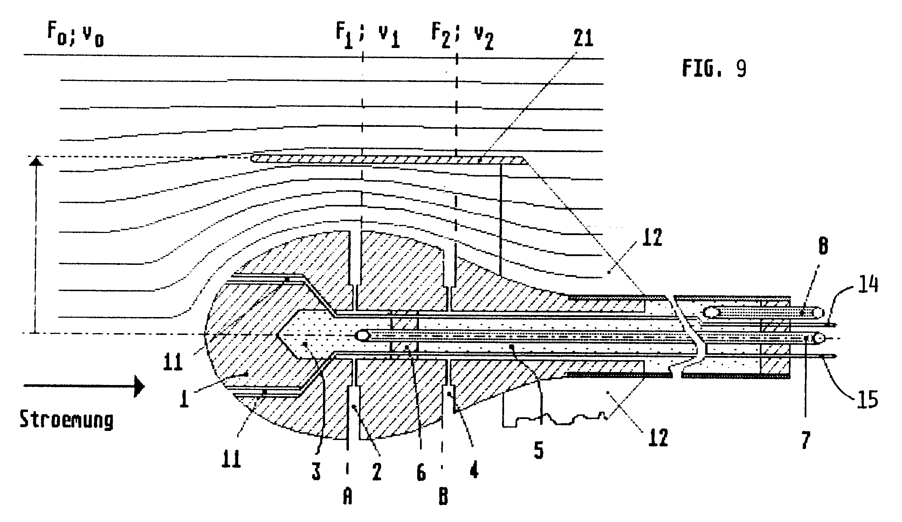

In den Figuren 8 und 9, die den Figuren 1 bzw. 3 entsprechen, weist der Strömungskörper 1 zwei Bohrungen 11 auf, die in einer Ebene liegen und von dem vordersten Nasenpunkt des Strömungskörpers gleich weit entfernt sind. Die Bohrungen 11, 11 sind mit Druckmeßleitungen 14,15 verbunden, die am hinteren Teil aus dem Meßkörper herausgeführt sind. Die Druckdifferenz zwischen den Druckmeßleitungen 14 und 15 kann in an sich bekannter Weise bestimmt werden und zur Steuerung eines Servomotors verwendet werden, der den Strömungskörper (in dem dargestellten Beispiel nach oben oder unten) verschwenkt, bis keine Druckdifferenz mehr gemessen wird. Der Servomotor und die im hinteren Teil des Strömungskörpers angeordnete Halterung mit Lager zum Verschwenken sind an sich bekannte Bauteile, die aus Gründen der Vereinfachung in den Figuren 8 und 9 weggelassen sind.

In gleicher Weise kann der Strömungskörper in einer dazu senkrechten Ebene (im dargestellten Beispiel aus der Papierebene heraus) verschwenkt werden, um einen Raumwinkel zu erfassen.

In einer weiteren vorteilhaften Ausführungsform der Erfindung sind die Bohrungen 11 über ein rohrförmiges Verbindungsstück im Inneren des Strömungskörpers miteinander verbunden, in dem sich eine Thermistor-Strömungsdiode befindet. Durch eine Druckdifferenz in den Bohrungen 11 entsteht an der Strömungsdiode eine Temperaturdifferenz, die eine elektrische Brückenschaltung beeinflußt, in der die Thermistor-Strömungsdiode eingebaut ist. Auf diese Weise brauchen nur elektrische Meßleitungen aus dem Strömungskörper herausgeführt werden, die Druckmeßleitungen 14,15 enden im Inneren des Strömungskörpers.

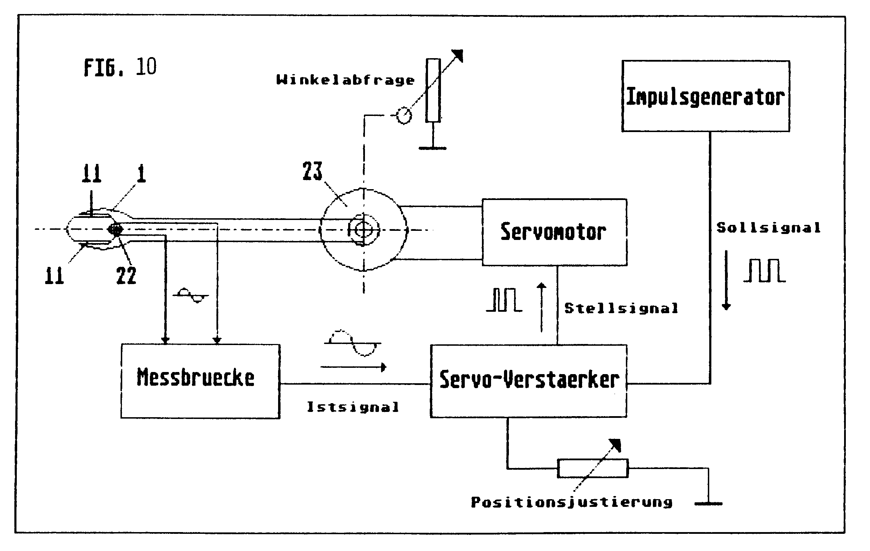

Fig.10 zeigt ein schematisches Blockschaltbild, das zur Erläuterung einer bevorzugten Ausführungsform des erfindungsgemäßen Verfahrens dient.

In Fig.10 ist der Strömungskörper 1 nur schematisch dargestellt, der an seinem hinteren Ende in einem Schwenklager 23 gehaltert ist, das von einem Servomotor angetrieben wird. Dieser Servomotor erhält über einen Servo-Verstärker ein Stellsignal, wenn die Meßbrücke nicht abgeglichen ist. In der Meßbrücke liegt ein direkt oder indirekt druckempfindliches Glied, das die Druckdifferenz in den Bohrungen 11,11 abtastet. Im dargestellten Beispiel liegt in einer Verbindungsleitung zwischen den Bohrungen 11,11 eine Thermistor-Strömungsdiode 22, deren elektrische Zuleitungen zu der Meßbrücke geführt sind. Im Falle einer Druckdifferenz weicht das IST-Signal vom SOLL-Signal, das von einem Impulsgenerator für den Servomotor geliefert wird, ab, und der Servomotor wird über den Servo-Verstärker betätigt, bis die Druckdifferenz wieder null ist.

Über ein Potentiometer kann die Positionsjustierung der Ausgangs- oder Referenzstellung der Sonde vorgenommen werden.

Weiterhin ist in Fig.10 eine Winkel-Abfrage-Einrichtung dargestellt, mit der abgefragt werden kann, um welchen Winkelbetrag der Strömungskörper 1 gegen die Ausgangs- oder Referenzstellung verschwenkt worden ist. Dazu ist ein Potentiometer mechanisch mit dem Schwenklager 23 gekoppelt und wird bei dessen Drehung verstellt. Die am Potentiometer abgegriffene Spannung kann direkt als Winkelbetragsignal elektrisch verarbeitet werden.

## Patentansprüche

1. Verfahren zur Messung der Strömungsgeschwindigkeit einer freien Strömung im Raum mittels eines hohlen rotationssymmetrischen Strömungskörpers mit mehreren auf seinem Umfang verteilt angeordneten Bohrungen, die in durch Trennwände (6,6') in seinem hohlen Innenraum gebildete Meßkammern reichen, bei dem

a) die Drücke innerhalb der sich durch die Zusammendrängung der Stromlinien ergebenden Druckverteilung an zwei oder mehreren in axialer Richtung verschiedenen Stellen eines in die Strömung gebrachten rotationssymmetrischen Strömungskörpers mit variierender Dicke gemessen werden und deren Differenz gebildet wird oder aber

b) die Differenz dieser Drücke direkt gemessen wird,

wobei die Meßstellen an verschieden dicken Stellen des Strömungskörpers (1) liegen und sich eine Meßstelle an oder nahe der dicksten Stelle des Strömungskörpers befindet, sodaß jeweils eine Meßstelle entsprechend der sich durch die Zusammendrängung der Stromlinien ergebenden Druckverteilung an einer Stelle höheren Unterdruckes liegt und eine jeweils andere Meßstelle an einer Stelle geringeren Unterdruckes liegt, und die Geschwindigkeit der Strömung aus der Quadratwurzel der bestimmten oder der direkt gemessenen Druckdifferenz, geteilt durch die Dichte des strömenden Mediums, und einem Geometriefaktor, der von der Form des Strömungskörpers abhängt, bestimmt wird, wobei die Druckmessung durch um den Umfang d.h. die Mantelquerschnittslinie rechtwinklig zur Achse, des den Meßkopf bildenden Strömungskörpers herum verteilte und in seinen Innenraum reichende Bohrungen (2,4,4') oder Ringschlitze erfolgt.

2. Verfahren nach Anspruch 1, **dadurch gekennzeichnet**, daß der Strömungskörper (1) über einen Servo-Mechanismus so in der Strömung ausgerichtet wird, daß seine Mittelachse in Richtung der Strömung verläuft, indem an mehreren, in gleichem Abstand von dem vorderen Nasenpunkt des Strömungskörpers liegenden Punkten der vorderen Kuppe der Druck gemessen und aus gegebenenfalls bestehenden Druckdifferenzen ein Nachführsignal für den Servo-Mechanismus abgeleitet wird.

2. Verfahren nach Anspruch 2, **dadurch gekennzeichnet** , daß an vier im gleichen Abstand von dem Nasenpunkt des Strömungskörpers (1) liegenden und voneinander gleich beabstandeten Punkten der Druck gemessen wird und aus der Druckdifferenz an gegenüberliegenden Meßpunkten jeweils ein Nachführsignal abgeleitet wird, wobei das Druckdifferenzsignal zum Nullabgleich einer Brückenschaltung ausgenutzt wird, die ihrerseits im nicht-abgeglichenen Zustand einen oder mehrere Servomotor(en) zur Drehung des Strömungskörpers steuert.

4. Verfahren nach Anspruch 1, **dadurch gekennzeichnet**, daß zur Bestimmung der Dichte die Drücke an drei in axialer Richtung verschiedenen Meßstellen (A, B, C) innerhalb der dynamischen, d.h. sich durch die Zusammendrängung der Stromlinien ergebenden Druckverteilung an dem Strömungskörper in inneren Kammern des Strömungskörpers über Bohrungen (2,4,4') oder Ringschlitze gemessen werden und die Druckdifferenzen von jeweils zwei Meßstellen bestimmt oder direkt gemessen werden und aus Relationen zwischen diesen Druckdifferenzen, die sich zwischen jeweils zwei Meßstellen ergeben, unter Berücksichtigung des jeweiligen, der axialen Lage der Stelle der Messung zugeordneten Geometriefaktors die Dichte des strömenden Mediums bestimmt wird, wobei die Strömungsgeschwindigkeit ohne zusätzliche Dichtemessung erhalten werden kann.

5. Vorrichtung zur Messung der Strömungsgeschwindigkeit einer freien Strömung im Raum, umfassend einen Meßkopf in Form eines rotationssymmetrischen Strömungskörpers (1) mit in seiner axialen Richtung variierender Dicke, der an zwei oder mehr in axialer Richtung verschiedenen Stellen unterschiedlicher Dicke von denen sich eine an oder nahe bei der dicksten Stelle des Strömungskörpers befindet, um seinen Umfang, d.h. die Mantelquerschnittslinie rechtwinklig zur Achse, herum verteilt in seinen hohlen Inneraum reichende Bohrungen (2, 4, 4') oder einen jeweils umlaufenden Ringschlitz, der durch Bohrungen mit dem hohlen Innenraum verbunden ist, aufweist, wobei der hohle Innenraum durch eine Trennwand (6; 6') zwischen einem ersten und einem zweiten Ringschlitz oder ersten (2) und zweiten (4;4') Bohrungen in zwei Kammern (3, 5; 5') unterteilt ist, in denen jeweils Druckmeßanschlüsse (7, 8; 8') enden, wobei die Druckmeßeinrichtungen entweder eine Meßeinrichtung zum Messen der Druckdifferenz zwischen zwei Kammern (3,5; 3,5') umfassen oder mit einer Vorrichtung zur Bestimmung der Differenz der gemessenen Druckwerte in jeder der beiden jeweiligen Kammern verbunden sind.

6. Vorrichtung nach Anspruch 5, **dadurch gekennzeichnet** , daß die vordere Endfläche (13) des Strömungskörpers (1) eine Kugelkalotte, ein Teil eines Rotationsellipsoids oder ein Überschallprofil ist.

7. Vorrichtung nach Anspruch 5 oder 6, **dadurch gekennzeichnet** , daß der Meßkopf von einem Ring (21) umgeben ist, der mit Abstand zur Oberfläche des Meßkopfes angebracht ist.

8. Vorrichtung nach Anspruch 7, **dadurch gekennzeichnet**, daß sich der Querschnitt der Wand des Ringes (21) in axialer Richtung ändert, wobei der Abstand zwischen der Meßkopfoberfläche und der Ringinnenseite an dem ersten Schlitz bzw. den ersten Bohrungen (2) am kleinsten ist.

9. Vorrichtung nach einem der Ansprüche 5, 6, 7 oder 8, **dadurch gekennzeichnet** , daß aus den Kammern (3,5) Druckmeßanschlüsse (7,8) und/oder elektrische Verbindungsleitungen von Meßeinrichtungen zum Messen der Drücke in oder der Druckdifferenz zwischen den beiden Kammern (3,5) durch ein am hinteren Ende des Meßkopfes befindliches Halteteil herausgeführt sind oder im Inneren des Meßkopfes eine elektrische Signal-Vorverarbeitung enthalten ist.

10. Vorrichtung nach einem der Ansprüche 5 bis 9, **dadurch gekennzeichnet** , daß auf der vorderen Kuppe des Strömungskörpers (1) im gleichen Abstand von dem vordersten Nasenpunkt des Strömungskörpers mehrere Bohrungen (11) vorgesehen sind, in denen Meßeinrichtungen zum Messen des Druckes in der jeweiligen Bohrung und/oder zum Messen von Druckdifferenzen zwischen jeweils zwei Bohrungen vorgesehen sind, die Druckdifferenzsignale abgeben, und daß der Strömungskörper in seinem hinteren Ende um mindestens eine Querachse schwenkbar gelagert ist und ein Servo-Mechanismus, der vorzugsweise mindestens einen Servomotor umfaßt, vorgesehen ist, dem die gegebenenfalls erzeugten Druckdifferenzsignale zugeführt werden und der den Strömungskörper verschwenkt, bis keine Druckdifferenzen mehr vorhanden sind.

11. Vorrichtung nach Anspruch 10, **dadurch gekennzeichnet** , daß vier Bohrungen im gleichen Abstand zum Nasenpunkt und voneinander auf der Vorderkuppe des Strömungskörpers (1) angeordnet sind, und daß die Druckdifferenz der zwei sich jeweils gegenüberliegenden Bohrungen (11,11) das Steuersignal für einen Servomotor für die Schwenkung des Strömungskörpers um eine erste Querachse liefert und die Druckdifferenz des anderen Bohrungspaares das Steuersignal für einen zweiten Servomotor zum Schwenken um eine zweite, zu der ersten rechtwinklige Querachse liefert.

12. Vorrichtung nach Anspruch 10 oder 11, **dadurch gekennzeichnet** , daß zur Messung der Druckdifferenz zwischen zwei Druckbohrungen (11,11) in einem Verbindungsstück zwischen diesen Druckbohrungen eine Thermistor-Strömungsdiode angeordnet ist, die in einer elektrischen Brückenschaltung liegt, welche andererseits über einen Servo-Verstärker mit einem Servomotor zum Verschwenken des Strömungskörpers (1) verbunden ist.

## Claims

1. A method for measuring the flow velocity of a free flow in space by means of a hollow rotationally symmetrical flow body having a plurality of holes arranged circumferentially distributed over it, extending into measuring chambers formed in its internal hollow space by means of partition walls (6,6′), in which:

a) the pressures within the pressure distribution resulting from the crowding of the streamlines are measured at two or more axially different positions of a rotationally symmetrical flow body of varying thickness placed in the flow and the pressure difference thereof is determined, or

b) the difference of these pressures is directly measured,

wherein the measuring positions are located at differently thick positions of the flow body (1) and one measuring position is at or near the thickest position of the flow body so that, corresponding to the pressure distribution resulting from the crowding of the streamlines, there is one measuring position at a position of higher underpressure and the other measuring position is located at a position of lower underpressure, respectively, and the velocity of the flow is determined from the square root of the pressure difference determined or directly measured, divided by the density of the flowing medium, and by a geometry factor which depends on the shape of the flow body, the pressure measurement being carried out through holes (2,4,4′) or annular slots extending into the internal part of the flow body and being distributed circumferentially around the flow body forming the measuring head i.e. along the cross-section line perpendicular to the axis of the casing.

2. A method in accordance with claim 1, characterized by the fact that the flow body (1) is aligned in the flow by a servo-mechanism in such a manner that its central axis extends in the direction of the flow, by measuring the pressures at several points on the front cap, which points are located at the same distance from the front nose of the flow body, and deriving a follow-up signal for the servo-mechanism from any pressure differences.

3. A method in accordance with claim 2, characterized by the fact that the pressure is measured at four points located at the same distance from the nose of the flow body (1) and being spaced equally from one another and a follow-up signal is derived from the pressure difference between two opposite measuring points, the pressure difference signal being used for the zero compensation of a bridge circuit, which, in the unbalance condition, controls one or several servo-motor(s) which pivote the flow body.

4. Method in accordance with claim 1, characterized by the fact that for determining the density, the pressures are measured at three in the axial direction different measuring positions (A, B, C) within the dynamic pressure distribution, i.e. the pressure distribution resulting from the crowding of the streamlines on the flow body, within internal chambers of the flow body by means of holes (2,4,4′) or annular slots and the pressure differences between two measuring positions are determined or directly measured and the density of the flowing medium is determined from relations between said pressure differences which result between each two measuring positions, with consideration of the respective geometry factor associated with the axial location of the position of measurement, where flow velocity can be obtained without additional density measurements.

5. Device for measuring the flow velocity of a free flow in three dimensions comprising a measuring head in the form of a rotationally symmetrical flow body (1) with varying thickness in its axial direction, which measuring head has in two or more in axially direction different positions of different thickness, one position of which being located at or near the thickest part of the flow body, distributed around its circumference, i.e. the cross-section line perpendicular to the axis of the casing, holes (2,4,4′) extending into its internal hollow space or respective annular slots, each of them being connected with the hollow internal space by means of holes, the internal hollow space being divided into two chambers (3,5,5′) by means of a partition wall (6,6′) between a first and second annular slot or first (2) and second (4,4′) holes, in which chambers pressure measuring conduits (7,8;8′) end, the pressure measuring equipment including a measuring device for measuring the pressure difference between two chambers (3,5;5′) or being connected to a device which determines the difference of the measured pressure values in each of the two chambers.

6. Device in accordance with claim 5, characterized by the fact that the front end surface (13) of the flow body (1) is a spherical cap, part of a rotational ellipsoid or an ultrasonic profile.

7. Device in accordance with claims 5 or 6, characterized by the fact that the measuring head is surrounded by a ring (21) which is fitted at a distance to the surface of the measuring head.

8. Device in accordance with claim 7, characterized by the fact that the cross-section of the wall of the ring (21) changes in the axial direction, the distance between the surface of the measuring head and the inside of the ring being smallest at the first slot or the first holes (2).

9. Device in accordance with claims 5, 6, 7 or 8, characterized by the fact that pressure measuring conduits (7,8) and/or electrical connection lines from measuring devices which measure the pressures in the two chambers or the pressure difference between the two chambers (3,5), are led out of the chambers (3,5) through a holding part located at the rear end of the measuring head, or an electrical signal pre-processor is located within the inside of the measuring head.

10. Device in accordance with any one of claims 5 to 9, characterized by the fact that a multiplicity of holes (11) are provided on the front cap of the flow body (1) at the same distances from the front nose of the flow body, in which holes measuring equipment are provided for measuring the pressure in the respective hole and/or for measuring the pressure differences between two of each of said holes, said measuring equipment emitting pressure difference signals, and that the flow body at its rear end is supported pivotably about at least one transverse axis, and that a servo-mechanism is provided, which preferably includes at least one servo-motor, to which any pressure difference signals generated are supplied and which pivotes the flow body until there are no longer any pressure differences.

11. Device in accordance with claim 10, characterized by the fact that four holes are located on the front cap of the flow body (1) at the same distances from the nose point and from one another, and that the pressure difference of two opposite holes (11,11) provides the control signal for one servo-motor for pivoting the flow body about a first transverse axis, and the pressure difference between the other pair of holes provides the control signal for a second servo-motor for pivoting about a second transverse axis being perpendicular to the first one.

12. Device in accordance with claims 10 or 11, characterized by the fact that for measuring the pressure difference between two pressure tappings (11,11) a thermistor flow diode is located in a connecting piece between these tappings, the same being included in an electrical bridge circuit which in turn is connected via a servo-amplifier to a servo-motor for pivoting the flow body (1).

## Revendications

1. Procédé de mesure de la vitesse d'écoulement d'un courant libre dans l'espace au moyen d'une sonde creuse à rotation symétrique possédant plusieurs orifices répartis à sa surface allant jusqu'aux chambres de mesure aménagées dans son intérieur creux à l'aide de membranes de séparation (6,6′) et sur laquelle

a) sont mesurées les pressions au sein de la répartition de la compression résultant du resserrement des lignes aérodynamiques, en deux endroits différents ou davantage disposés dans le sens axial d'une sonde à rotation symétrique, d'épaisseur variable, placée dans le courant et dont la différence est calculée ou bien alors

b) la différence de ces pressions est calculée directement,

les points de mesure se trouvant à des endroits de différentes épaisseurs de la sonde (1), l'un de ces points de mesure étant situé à l'endroit le plus épais de la sonde ou à proximité de ce dernier, de façon à ce qu'un point de mesure conformément à la répartition de la compression résultant du resserrement des lignes aérodynamiques se trouve respectivement à un endroit où la dépression est supérieure et qu'un autre point de mesure se trouve à un endroit où la dépression est plus faible, et que la vitesse d'écoulement du courant soit déterminée à partir de la racine carrée de la différence de pression calculée ou mesurée directement divisée par la densité du medium s'écoulant et d'un facteur géométrique dépendant de la forme de la sonde, la mesure de pression se faisant par les orifices (2,4,4′) allant jusqu'à l'intérieur ou les fentes annulaires réparties sur le pourtour de la sonde constituant la tête de mesure, c'est-à dire la génératrice transversale étant perpendiculaire à l'axe.

2. Procédé selon la revendication 1, caractérisé en ce que la sonde (1) est orientée dans le courant par un servo-mécanisme de façon à ce que sa ligne médiane se trouve dans le sens du courant, la pression étant mesurée à plusieurs points du dôme situés à égale distance du nez de la sonde et un signal suivi en permanence pour le servo-mécanisme étant tiré des différences de pression éventuellement en présence.

3. Procédé selon la revendication 2, caractérisé en ce que la pression est mesurée en quatre points situés à égale distance du nez de la sonde (1) et à même écart l'un de l'autre qu'un signal suivi en permanence est respectivement tiré de la différence de pression mesurée en deux points opposés, le signal de différence de pression étant utilisé pour compenser un circuit en pont qui de son côté commande un ou plusieurs servo-moteurs servant à la rotation de la sonde en cas de non-alignement.

4. Procédé selon la revendication 1, caractérisé en ce que pour déterminer la densité, les pressions sont mesurées en trois points de mesure (A, B, C) alignés dans le sens axial à l'intérieur de la répartition dynamique de la compression sur la sonde, c'est-à-dire résultant du resserrement des lignes aérodynamiques, dans les chambres intérieures de la sonde, au moyen d'orifices (2,4,4′) ou de fentes annulaires et que les différences de pression de deux points de mesure respectifs sont calculées ou mesurées directement et que des relations entre ces différences de pression résultant de deux points de mesure respectifs, en tenant compte du facteur géométrique respectivement attribué selon la position axiale de l'endroit où la mesure est effectuée, la densité du medium s'écoulant est déterminée, la vitesse d'écoulement pouvant être obtenue sans mesure de densité supplémentaire.

5. Dispositif de mesure de la vitesse d'écoulement d'un courant libre dans l'espace comprenant une tête de mesure ayant la forme d'une sonde (1) à rotation symétrique, d'épaisseur variable dans son orientation axiale présentant en deux endroits différents ou davantage, d'épaisseur différente, disposés dans le sens axial, l'un de ces points de mesure étant situé à l'endroit le plus épais de la sonde ou à proximité de ce dernier, répartis sur son pourtour, c'est-à dire la génératrice transversale étant perpendiculaire à l'axe, des orifices (2, 4, 4') allant jusqu'à son intérieur creux ou une fente annulaire faisant respectivement le tour et reliée avec l'intérieur creux par des orifices, l'intérieur creux étant divisé par une membrane de séparation (6; 6') entre une première et une deuxième fente annulaire ou entre premiers(2) et deuxièmes orifices (4; 4'), en deux chambres (3, 5; 5') dans lesquelles aboutissent respectivement les raccords de mesure de pression (7,8;8') , soit que les dispositifs de mesure de la pression comprennent un dispositif de mesure permettant de mesurer la différence de pression entre deux chambres (3,5; 3,5'), soit qu'ils soient reliés avec un dispositif de détermination des valeurs de pression mesurées dans chacune des deux chambres respectives.

6. Dispositif selon la revendication 5, caractérisé en ce que la surface de l'extrémité avant (13) de la sonde (1) est une calotte sphérique, une partie d'ellipsoïde de rotation ou un profil supersonique.

7. Dispositif selon la revendication 5 ou 6, caractérisé en ce que la tête de mesure est entourée d'un anneau (21) qui est fixé en présentant un écart par rapport à la surface de la tête de mesure.

8. Dispositif selon la revendication 7, caractérisé en ce que la section transversale de la paroi de l'anneau (21) varie dans le sens axial, l'écart entre la surface de la tête de mesure et le bord intérieur de l'anneau est le plus réduit au niveau de la première fente ou des premiers orifices (2).

9. Dispositif selon l'une des revendications 5, 6, 7, ou 8, caractérisé en ce que des raccords de mesure de pression (7, 8) et/ou des câbles de liaison électrique appartenant à des installations de mesure des pressions dans les deux chambres (3, 5) ou de la différence de pression entre ces dernières, sortent des deux chambres (3, 5) à travers un support de fixation qui se trouver à l'extrémité arrière de la tête de mesure, ou en ce qu'un pré-traitement du signal électrique se trouve à l'intérieur de la tête de mesure.

10. Dispositif selon l'une des revendications 5 à 9, caractérisé en ce que sur le dôme avant de la sonde (1) sont prévus, à égale distance du nez avant de la sonde, plusieurs orifices (11) dans lesquels sont prévus des appareils de mesure permettant de mesurer la pression dans les orifices respectifs et/ou la mesure de différences de pression entre deux orifices respectifs, appareils qui fournissent des signaux de différence de pression, et en ce que la sonde est montée de façon articulée sur au moins un axe transversal et qu'un servomécanisme, comprenant de préférence au moins un servo-moteur est prévu, auquel les signaux de différence de pression éventuellement produits sont acheminés et qui bascule la sonde jusqu'à suppression des différences de pression.

11. Dispositif selon la revendication 10, caractérisé en ce que quatre orifices sont aménagés à égale distance du sommet du nez et équidistants l'un de l'autre sur le dôme avant de la sonde (1) et en ce que la différence de pression des deux orifices respectivement opposés (11, 11) fournit le signal de commande du servo-moteur pour le baculement de la sonde autour d'un premier axe transversal et que la différence de pression de l'autre paire d'orifices fournit le signal de commande d'un deuxième servo-moteur pour le basculement autour d'un deuxième axe transversal perpendiculaire au premier.

12. Dispositif selon la revendication 10 ou 11, caractérisé en ce que qu'une diode d'écoulement à thermistor est installée sur une pièce de liaison située entre deux orifices à pression pour mesurer la différence de pression entre ces deux orifices à pression (11, 11), diode qui est montée sur un circuit électrique en pont qui est d'autre part relié au moyen d'un servo-ampli à un servo-moteur permettant de basculer la sonde (1).

$F_0; v_0$  $F_1; v_1$  $F_2; v_2$

Stroemung

1  2 3 6  4  5  7  8

A  B

EP 0 266 376 B1

FIG. 1

$F_0; v_0$

$F_3; v_3$  $F_1; v_1$  $F_2; v_2$

EP 0 266 376 B1

8

Stroemung

8'  7

1  5'  4'  6'  2 3 6  4  5

C  A  B

Fig. 2

$F_0; v_0$     $F_1; v_1$    $F_2; v_2$    21

12

Stroemung

1

2 3 6   4

A     B

5

12

8

7

FIG. 3

EP 0 266 376 B1

FIG. 4

FIG. 5

FIG. 6

FIG. 7

Fig. 8

FIG. 9

$F_0; v_0$    $F_1; v_1$    $F_2; v_2$    21

Stroemung

EP 0 266 376 B1

FIG. 10

Winkelabfrage

Impulsgenerator

11    1          23

Servomotor

Sollsignal

Stellsignal

Messbruecke

Servo-Verstaerker

Istsignal

Positionsjustierung

EP 0 266 376 B1